Europäisches Patentamt

European Patent Office

Office européen des brevets

(11) Veröffentlichungsnummer: **0 236 693**
**B1**

(12) **EUROPÄISCHE PATENTSCHRIFT**

(45) Veröffentlichungstag der Patentschrift:
**05.09.90**

(21) Anmeldenummer: **87100652.4**

(22) Anmeldetag: **19.01.87**

(51) Int. Cl.⁵: **G01F 13/00,** G01F 1/58,
B67D 3/00

(54) Vorrichtung zur Ueberwachung und Steuerung eines durch eine Rohrleitung geförderten fliessfähigen Produkts.

(30) Priorität: **22.01.86 CH 241/86**

(43) Veröffentlichungstag der Anmeldung:
**16.09.87 Patentblatt 87/38**

(45) Bekanntmachung des Hinweises auf die Patenterteilung:
**05.09.90 Patentblatt 90/36**

(84) Benannte Vertragsstaaten:
**AT BE CH DE ES FR GB GR IT LI LU NL SE**

(56) Entgegenhaltungen:
**EP-A- 0 069 456**
**DE-A- 3 210 465**
**DE-B- 1 216 560**
**GB-A- 2 101 089**

**MEASUREMENT AND CONTROL, Band 3, Nr. 12,
Dezember 1970, Seiten T193-T196, London, GB; M.K.
BEVIR: "Induced voltage electromagnetic flowmeters
for pulsating flows"**

(73) Patentinhaber: **SOCIETE DES PRODUITS NESTLE S.A.,
Case postale 353, CH-1800 Vevey(CH)**

(72) Erfinder: **Schmied, Rudolf, Flurweg 4,
CH-3510 Konolfingen(CH)**
Erfinder: **Hafner, Peter V., Schwieriweg 15,
CH-4410 Liestal(CH)**

## Beschreibung

Die Erfindung betrifft eine Vorrichtung zur Überwachung und Steuerung eines durch eine Rohrleitung geförderten fließfähigen Produkts, mit einem magnetisch-induktiven Durchflußmesser, dessen Meßrohr in die Rohrleitung eingefügt ist, und mit einem die Strömung des Produkts beeinflussenden Steuerorgan, das von einer Antriebsvorrichtung mittels eines mechanisch verstellbaren stangenförmigen Betätigungsteils betätigbar ist.

Vorrichtungen dieser Art dienen insbesondere als Dosiervorrichtungen zum Abfüllen vorbestimmter Füllmengen des fließfähigen Produkts in Behälter. Das Steuerorgan ist in diesem Fall ein Ventil, das den Durchfluß des Produkts steuert. Mit Hilfe des magnetisch-induktiven Durchflußmessers kann die Produktmenge festgestellt werden, die ab dem Öffnen des Ventils durch die Rohrleitung geströmt ist. Sobald die gemessene Produktmenge dem Sollwert der Füllmenge entspricht, wird das Ventil geschlossen. Die Verwendung eines magnetisch-induktiven Durchflußmessers bietet den Vorteil, daß sich im Förderweg des Produkts keine bewegten Teile oder Einschnürungen befinden. Dies ermöglicht auch auf einfache Weise eine gründliche Reinigung der Anlage einschließlich des Durchflußmessers, wie sie insbesondere zur Erfüllung lebensmittelrechtlicher Vorschriften erforderlich ist.

Vorrichtungen dieser Art sind beispielsweise aus der DE-OS 33 39 274 und aus dem DE-GM 83 11 725 bekannt. Bei diesen bekannten Vorrichtungen ist der magnetisch-induktive Durchflußmesser in die Rohrleitung an einer Stelle eingefügt, die in der Strömungsrichtung vor dem Ventil und seiner Betätigungseinrichtung liegt, damit diese Teile die Funktion des magnetisch-induktiven Durchflußmessers nicht beeinträchtigen. Der magnetisch-induktive Durchflußmesser liegt daher in einem beträchtlichen Abstand von der Austrittsöffnung für das Produkt. Dadurch können sich Meßfehler infolge verzögerten Ansprechens oder eines Nachlaufens des Produktes ergeben. Bei der aus dem DE-GM 83 11 725 bekannten Vorrichtung ist zwar das Ventil zur Verhinderung eines Nachlaufens unmittelbar an der Austrittsöffnung angebracht, und es wird durch eine Betätigungsstange betätigt, die sich axial durch ein den Endabschnitt der Rohrleitung bildendes Füllrohr erstreckt; der magnetisch-induktive Durchflußmesser ist aber auch in diesem Fall in dem vor dem Füllrohr liegenden Teil der Rohrleitung angeordnet und liegt daher in entsprechend großem Abstand von der Austrittsöffnung und dem Ventil.

Die Anwendung dieses bekannten Konstruktionsprinzips ergibt Platzprobleme insbesondere bei Abfüllanlagen, die eine größere Anzahl von eng nebeneinander liegenden Dosiervorrichtungen enthalten, um jeweils eine größere Anzahl von Behältern gleichzeitig zu füllen. In diesem Fall muß ja jede Dosiervorrichtung mit einem eigenen magnetisch-induktiven Durchflußmesser ausgestattet sein, und die Unterbringung der erforderlichen Anzahl von magnetisch-induktiven Durchflußmessern kann, insbesondere im Hinblick auf die erwünschten kurzen Strömungswege, Schwierigkeiten verursachen.

Aufgabe der Erfindung ist die Schaffung einer Vorrichtung der eingangs angegebenen Art, die bei sehr platzsparendem Aufbau eine Anordnung des magnetisch-induktiven Durchflußmessers in beliebig geringem Abstand von dem Steuerorgan ermöglicht, ohne daß die Funktionsweise des magnetisch-induktiven Durchflußmessers dadurch beeinträchtigt wird.

Diese Aufgabe wird nach der Erfindung dadurch gelöst, daß der magnetisch-induktive Durchflußmesser zwischen der Antriebsvorrichtung und dem Steuerorgan in die Rohrleitung eingefügt ist und daß das stangenförmige Betätigungsteil axial durch das Meßrohr des magnetisch-induktiven Durchflußmessers hindurchgeführt ist.

Da bei der erfindungsgemäßen Vorrichtung das stangenförmige Betätigungsteil für das Steuerorgan durch das Meßrohr des magnetisch-induktiven Durchflußmessers hindurchgeführt ist, kann der Durchflußmesser im Strömungsweg beliebig nahe am Steuerorgan angeordnet werden, selbst wenn das Steuerorgan unmittelbar an einer Austrittsöffnung sitzt. Dadurch ist es insbesondere möglich, den magnetisch-induktiven Durchflußmesser direkt in das am Ende des Strömungswegs liegende Füllrohr einer Dosiervorrichtung einzufügen, durch das auch die Betätigungsstange für das die Fülldüse steuernde Ventil geht. Dies ergibt einen sehr platzsparenden Aufbau, der es insbesondere ermöglicht, eine größere Anzahl von Dosiervorrichtungen in einer gedrängten Anordnung unterzubringen.

Erstaunlicherweise wird die Funktion des magnetisch-induktiven Durchflußmessers durch das axial durch das Meßrohr hindurchgehende stangenförmige Betätigungsteil nicht beeinträchtigt, sondern sogar verbessert. Dies hat mehrere Gründe. Einerseits ist durch das stangenförmige Betätigungsteil der verfügbare Strömungsquerschnitt verkleinert, so daß bei gleichem Produktdurchsatz die Strömungsgeschwindigkeit entsprechend vergrößert ist. Da ein magnetisch-induktiver Durchflußmesser eine Spannung erzeugt, die der Strömungsgeschwindigkeit proportional ist, wird dadurch die Meßgenauigkeit verbessert. Ferner ist in dem ringförmigen Zwischenraum zwischen dem stangenförmigen Betätigungsteil und der Meßrohrwand, auf den der Strömungsweg beschränkt ist, die Strömungsgeschwindigkeit insbesondere bei zähflüssigen oder pastösen Produkten wesentlich gleichmäßiger als in einem freien Rohrquerschnitt, und es lassen sich in diesem ringförmigen Zwischenraum auch gleichmäßigere magnetische Feldstärken erzielen. Auch diese Auswirkungen verbessern die Meßgenauigkeit des magnetisch-induktiven Durchflußmessers.

Schließlich ist es durch gezielte Ausbildungen des stangenförmigen Betätigungsteils möglich, die Eigenschaften des magnetisch-induktiven Durchflußmessers in gewünschter Weise zu beeinflussen. Durch wahlweise Verwendung von stangenförmigen Betätigungsteilen mit unterschiedlichen Querschnitten können für den gleichen magnetisch-induktiven Durchflußmesser unterschiedliche Strömungsquerschnitte erhalten werden, wodurch sich die Empfindlichkeit des Meßaufnehmers optimal einstellen läßt. Ferner kann das stangenförmige Betätigungsteil zumindest im Bereich des magnetisch-induktiven Durchflußmessers wenigstens teilweise aus weichmagnetischem Material bestehen, wodurch der magnetische Widerstand des Magnetflußweges verringert wird, was einen geringeren Energiebedarf zur Folge hat. Zusätzlich kann durch das weichmagnetische Material auch die Feldverteilung in dem ringförmigen Strömungskanal verbessert werden. Wenn das stangenförmige Betätigungsteil zur Betätigung des Steuerorgans axial verstellbar ist und das weichmagnetische Material auf den aktiven Bereich des magnetisch-induktiven Durchflußmessers beschränkt ist, verändert die axiale Verstellung des weichmagnetischen Materials die magnetischen Eigenschaften des magnetisch-induktiven Durchflußmessers, was zur Kontrolle der Verstellung ausgenutzt werden kann.

Schließlich begünstigt der kompakte, koaxiale Aufbau die Reinigung der ganzen Vorrichtung einschließlich des magnetisch-induktiven Durchflußmessers. Dies ist insbesondere bei der Anwendung auf dem Lebensmittelgebiet von großer Bedeutung.

Vorteilhafte Ausgestaltungen und Weiterbildungen der Erfindung sind in den Unteransprüchen gekennzeichnet.

Weitere Vorteile und Merkmale der Erfindung ergeben sich aus der folgenden Beschreibung eines Ausführungsbeispiels, das in der Zeichnung dargestellt ist. In der Zeichnung zeigt:

Fig. 1 eine schematische Darstellung des Dosierkopfs einer Abfüllanlage,

Fig. 2 den Dosierkopf von Fig. 1 in näheren Einzelheiten bei geschlossenem Ventil,

Fig. 3 den Dosierkopf bei geöffnetem Ventil und

Fig. 4 die Fülldüse des Dosierkopfs mit einer Zusatzeinrichtung zur Reinigung.

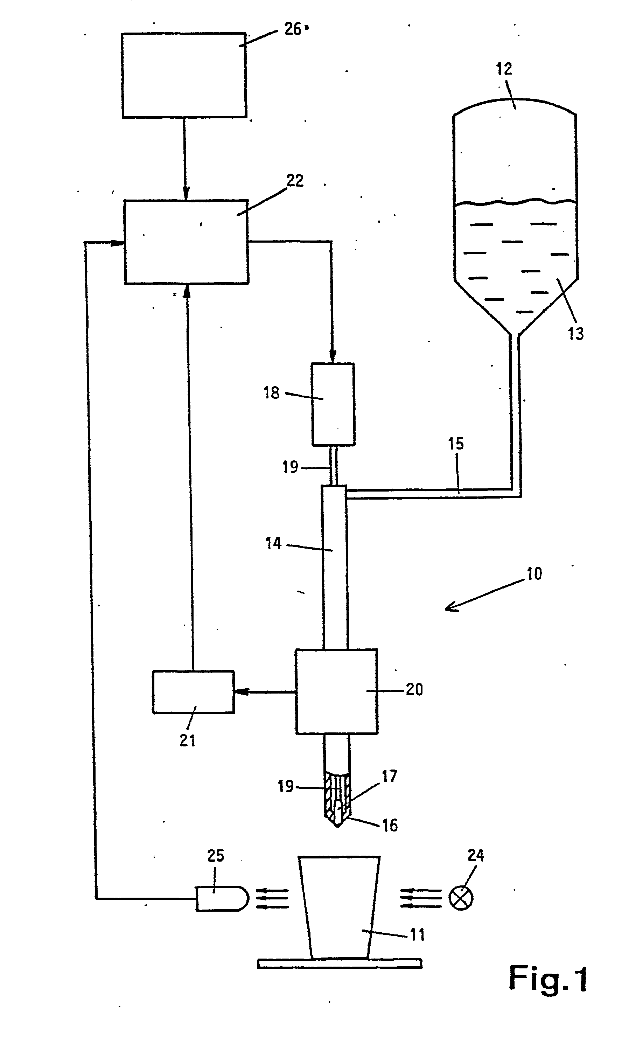

Fig. 1 zeigt schematisch den Dosierkopf 10 einer Abfüllanlage, der dazu bestimmt ist, vorbestimmte Füllmengen eines fließfähigen Produkts in Behälter 11 einzubringen. Ein Vorratsbehälter 12 enthält das abzufüllende fließfähige Produkt 13, das flüssig bis pastös sein kann. Der Dosierkopf 10 enthält ein geradliniges vertikales Füllrohr 14, das am oberen Ende durch eine Rohrleitung 15 mit dem Behälter 12 verbunden ist. Am unteren Ende des Füllrohrs 14 ist eine Fülldüse 16 ausgebildet oder angebracht. Die Fülldüse 16 ist durch ein Ventil 17 verschließbar, das von einer über dem oberen Ende des Füllrohres 14 angeordneten Antriebsvorrichtung 18 mittels einer Betätigungsstange 19 betätigbar ist, die sich axial durch das Füllrohr 14 erstreckt. Bei dem dargestellten Ausführungsbeispiel ist angenommen, daß das Ventil 17 durch eine lineare Auf- und Abbewegung geöffnet bzw. geschlossen wird. Die Antriebsvorrichtung 18 ist daher so ausgebildet, daß sie die Betätigungsstange 19 in ihrer Achsrichtung verschiebt. Die Antriebsvorrichtung 18 kann in diesem Fall beispielsweise ein Elektromagnet oder auch eine hydraulische oder pneumatische Kolben-Zylinder-Einheit sein.

Zwischen der Fülldüse 16 und der Antriebsvorrichtung 18 ist in das Füllrohr 14 ein magnetisch induktiver Durchflußmesser 20 eingefügt, der in bekannter Weise so ausgebildet ist, daß er ein elektrisches Signal liefert, das für die Strömungsgeschwindigkeit des fließfähigen Produkts und somit, bei bekanntem Strömungsquerschnitt, auch für den Produktdurchsatz kennzeichnend ist. Der Ausgang des magnetisch-induktiven Durchflußmessers 20 ist mit einem Rechner 21 verbunden, der aus dem Ausgangssignal des magnetisch-induktiven Durchflußmessers 20 durch Integration die durch das Füllrohr 14 geförderte und durch die Fülldüse 16 abgegebene Produktmenge berechnet. Der Ausgang des Rechners 21 ist mit einem Steuergerät 22 verbunden, das die Antriebsvorrichtung 18 steuert.

Die zu füllenden Behälter 11 werden der Reihe nach unter die Fülldüse 16 gebracht. Eine von einer Lichtquelle 24 und einer Fotozelle 25 gebildete Lichtschranke stellt das Vorhandensein eines Behälters 11 unter der Fülldüse 16 fest. Der Ausgang der Fotozelle 25 ist mit dem Steuergerät 22 verbunden. Schließlich ist noch eine Start-Stop-Einrichtung 26 vorhanden, die ebenfalls mit dem Steuergerät 22 verbunden ist. Mit der Start-Stop-Einrichtung 26 kann die Abfüllanlage in Betrieb gesetzt bzw. stillgesetzt werden.

Die Funktion der in Fig. 1 dargestellten Abfüllanlage ist ohne weiteres verständlich: Nachdem sie durch die Start-Stop-Einrichtung 26 in Betrieb gesetzt worden ist, wird ein Behälter 11 unter die Fülldüse 16 gebracht. Die Fotozelle 25 liefert zum Steuergerät 22 ein Signal, das anzeigt, daß ein Behälter 11 zum Füllen bereit ist. Das Steuergerät 22 veranlaßt die Antriebsvorrichtung 18, das Ventil 17 mittels der Betätigungsstange 19 zu öffnen. Nun strömt das abzufüllende Produkt durch das Füllrohr 14, den magnetisch-induktiven Durchflußmesser 20 und die Fülldüse 16 in den Behälter 11. Der magnetisch-induktive Durchflußmesser 20 liefert zum Rechner 21 Signale, die den Produktdurchsatz anzeigen. Der Rechner 21 berechnet fortlaufend die seit dem Öffnen des Ventils 17 geförderte Produktmenge, die gleich der aus der Fülldüse 16 in den Behälter 11 abgegebenen Füllmenge ist, und liefert das Ergebnis dieser Berechnung fortlaufend zu dem Steuergerät 22, beispielsweise in Form von Impulsen, von denen jeder für eine vorbestimmte kleine Teilmenge steht. Im Steuergerät 22 wird die abgegebene Füllmenge fortlaufend mit einem voreingestellten Sollwert verglichen, der die gewünschte Füllmenge darstellt, die in jeden Behälter 11 eingefüllt werden soll. Sobald der Vergleich ergibt, daß die in den Behälter 11 eingebrachte Füllmenge dem Sollwert entspricht, veranlaßt das Steuergerät 22, daß die Antriebsvorrichtung 18 das Ventil 17 schließt. Der gleiche Vorgang wiederholt sich dann für jeden weiteren Behälter 11, der unter die Fülldüse 16 gebracht wird.

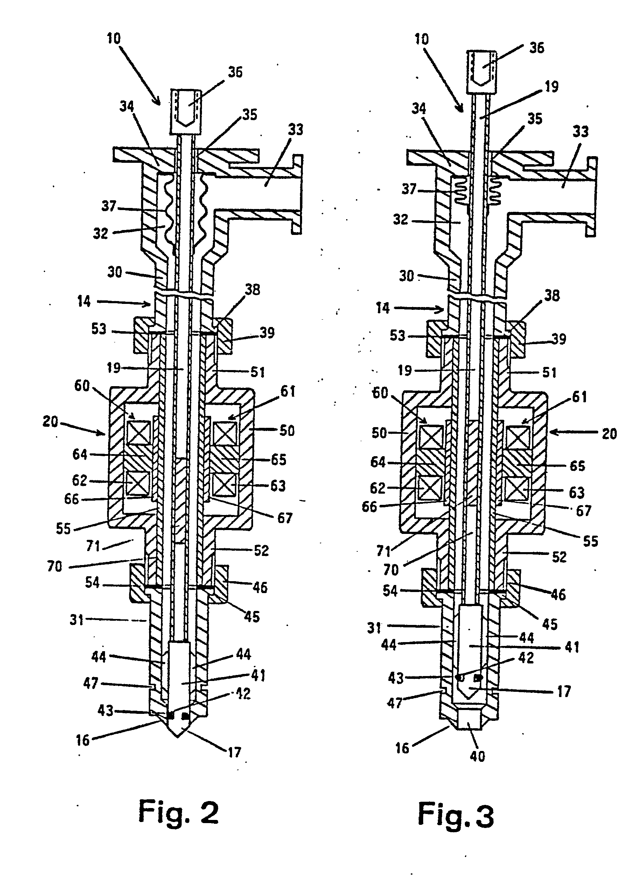

Die Figuren 2 und 3 zeigen den Dosierkopf 10 in näheren Einzelheiten, wobei das Ventil 17 in Fig. 2 in der geschlossenen Stellung und in Fig. 3 in der geöffneten Stellung dargestellt ist. Das Füllrohr 14 ist in zwei Abschnitte 30 und 31 unterteilt, zwischen die der magnetisch-induktive Durchflußmesser 20 eingefügt ist. Der obere Füllrohrabschnitt 30 weist am oberen Ende eine Erweiterung 32 auf, in die ein Anschlußstutzen 33 im rechten Winkel einmündet. Der Anschlußstutzen 33 dient zum Anschluß der Rohrleitung 15 (Fig. 1). Unmittelbar oberhalb der Einmündung des Anschlußstutzens 33 ist der obere Füllrohrabschnitt 30 durch eine Endwand 34 abgeschlossen, die eine Mittelöffnung 35 für den Durchgang der Betätigungsstange 19 hat. An dem aus der Mittelöffnung 35 nach oben herausragenden Ende der Betätigungsstange 19 ist ein Gewindekopf 36 für die Verbindung mit der Antriebsvorrichtung 18 angebracht. In der Erweiterung 32 ist ein Faltenbalg 37 angeordnet, der am oberen Ende mit der Endwand 34 und am unteren Ende mit der Betätigungsstange 19 dicht verbunden ist. Der Faltenbalg 37 ergibt eine vollkommene Abdichtung der Durchführung der Betätigungsstange 19 durch die Mittelöffnung 35, ohne die Axialbewegung der Betätigungsstange zu behindern. Die Erweiterung 32 ermöglicht die Unterbringung des Faltenbalgs 37 ohne unzulässige Verringerung des Strömungsquerschnitts. Am unteren Ende des Füllrohrabschnitts 30 ist ein Flansch 38 angeformt, der als Anschlag für eine Überwurfmutter 39 dient.

Der untere Füllrohrabschnitt 31 enthält die Fülldüse 16 und das Ventil 17. Die Fülldüse 16 hat eine zylindrische Austrittsöffnung 40 (Fig. 3), und das Ventil 17 ist durch einen zylindrischen Ventilkörper 41 gebildet, der im Gleitsitz in die Austrittsöffnung 40 paßt. Der Ventilkörper 41 ist mit dem unteren Ende der Betätigungsstange 19 fest verbunden, so daß er durch die Betätigungsstange 19 axial verstellbar ist. Nahe dem unteren Ende weist der Ventilkörper 41 eine Ringnut 42 auf, in der ein O-Dichtungsring 43 sitzt. In der Schließstellung des Ventils (Fig. 2) befindet sich der O-Dichtungsring 43 in der Austrittsöffnung 40, wodurch diese dicht verschlossen wird. In der Offenstellung (Fig. 3) ist der Ventilkörper 41 vollständig aus der Austrittsöffnung 40 herausgezogen, so daß das Produkt ungehindert aus der Fülldüse 16 austreten kann. Am Ventilkörper 41 sind Führungsflügel 44 angebracht, die an der Innenwand des Füllrohrabschnitts 31 gleitend anliegen, um den Ventilkörper 41 auch in der zurückgezogenen Stellung (Fig. 3) genau zentrisch zu halten.

Am oberen Ende des unteren Füllrohrabschnitts 31 ist ein Flansch 45 angeformt, der als Anschlag für eine Überwurfmutter 46 dient. In der Nähe der Fülldüse 16 ist an der Außenseite des Füllrohrabschnitts 31 eine Ringnut 47 angebracht, deren Zweck später erläutert wird.

Der magnetisch-induktive Durchflußmesser 20 hat den allgemein üblichen Aufbau; es kann sich um einen handelsüblichen magnetisch-induktiven Durchflußmesser handeln, der zwischen die beiden Füllrohrabschnitte 30 und 31 eingefügt wird. Er hat ein Gehäuse 50, an das zwei axiale Rohrstutzen 51 und 52 angeformt sind, die mit Außengewinden versehen sind, auf die die Überwurfmuttern 39 und 46 aufschraubbar sind. Dadurch kann der magnetisch-induktive Durchflußmesser 20 unter Einfügung von Dichtungen 53 und 54 dicht zwischen den Flanschen 38 und 45 der Füllrohrabschnitte 30, 31 befestigt werden.

Über die ganze axiale Länge des magnetisch-induktiven Durchflußmessers 20 erstreckt sich im Innern des Gehäuses 50 und der Rohrstutzen 51, 52 ein Meßrohr 55, das den gleichen Innendurchmesser wie die sich anschließenden Füllrohrabschnitte 30 und 31 hat. Das Meßrohr 55 stellt somit die Kontinuität des Strömungswegs durch das Füllrohr 14 her. Innerhalb des Gehäuses 50 sind auf zwei einander diametral gegenüberliegenden Seiten des Meßrohrs 55 zwei Elektromagnete 60, 61 angebracht, die zur Erzeugung eines diametral gerichteten Magnetfelds im Innern des Meßrohres 55 dienen. Der Elektromagnet 60 hat eine Magnetfeldspule 62, einen von der Magnetfeldspule 62 umgebenen Magnetkern 64 und einen Polschuh 66 in Form einer gekrümmten Platte, die sich an die Stirnfläche des Magnetkerns 64 anschließt und an der Außenfläche des Meßrohres 55 anliegt. In gleicher Weise besteht der Elektromagnet 61 aus einer Magnetfeldspule 63, einem Magnetkern 65 und einem Polschuh 67. Wenn durch die Magnetfeldspulen 62 und 63 ein Strom geschickt wird, erzeugen die Elektromagnete 60, 61 im Innern des Meßrohrs 55 zwischen den Polschuhen 66 und 67 ein Magnetfeld, das senkrecht zur Achse des Meßrohres gerichtet ist. Die Rückführung des Magnetflusses kann über das Gehäuse 50 erfolgen, wenn dieses aus weichmagnetischem Material besteht, oder auch über ein besonderes Magnetjoch.

Die bekannte Wirkungsweise eines solchen magnetisch-induktiven Durchflußmessers beruht auf dem Faraday'schen Induktionsgesetz. Wenn durch das Meßrohr 55 eine elektrisch leitende Flüssigkeit strömt, ist das Magnetfeld senkrecht zur Strömungsrichtung gerichtet. In der elektrisch leitenden Flüssigkeit wird daher eine Spannung induziert, die dem Produkt aus der magnetischen Feldstärke und der Strömungsgeschwindigkeit proportional ist. Bei konstanter Feldstärke ist diese Spannung also unmittelbar der Strömungsgeschwindigkeit proportional. Zur Abnahme dieser Spannung enthält der magnetisch-induktive Durchflußmesser zwei Elektroden, die einander diametral gegenüber an der Wand des Meßrohres 55 angebracht sind, wobei die die beiden Elektroden verbindende Durchmesserachse senkrecht zur Strömungsrichtung und senkrecht zur Magnetfeldachse steht, also senkrecht zur Zeichenebene von Fig. 2 und 3. Diese Elektroden sind in Fig. 2 und 3 nicht sichtbar, weil die eine Elektrode weggeschnitten ist und die andere Elektrode durch die Betätigungsstange 19 verdeckt ist.

Die an den Elektroden abgegriffene Spannung wird von der Elektronik des magnetisch-induktiven Durchflußmessers 20 in ein Signal umgewandelt, das für die Verarbeitung im Rechner 21 geeignet ist und den Produktdurchsatz, also die pro Zeiteinheit durch den Strömungsquerschnitt fließende Produktmenge, anzeigt.

Eine bekannte Voraussetzung für die richtige Funktion eines solchen magnetisch-induktiven Durchflußmessers besteht darin, daß die mit der elektrisch leitenden Flüssigkeit in Berührung stehende Fläche des Meßrohres 55 elektrisch nichtleitend ist. Daher muß entweder das ganze Meßrohr aus einem isolierenden oder sehr hochohmigen Material bestehen, oder seine Innenfläche muß mit einer Isolierschicht bedeckt sein.

Die Betätigungsstange 19 geht sowohl durch die beiden Füllrohrabschnitte 30 und 31 als auch durch das Meßrohr 55 des magnetisch-induktiven Durchflußmessers 20 axial hindurch. Für die Strömung steht also nicht der gesamte Querschnitt dieser Rohre zur Verfügung, sondern nur der ringförmige Querschnitt, der zwischen der Rohrwand und der Betätigungsstange frei bleibt. Die Funktion des magnetisch-induktiven Durchflußmessers wird dadurch nicht beeinträchtigt, sondern sogar aus mehreren Gründen verbessert. Eine Verbesserung ergibt sich dadurch, daß bei gegebenem Produktdurchsatz die Strömungsgeschwindigkeit entsprechend der Querschnittsverringerung vergrößert ist. Demzufolge ist auch die induzierte Spannung größer, die mittels der Elektroden des magnetisch-induktiven Durchflußmessers abgegriffen wird. Dadurch erhöht sich die Empfindlichkeit und Meßgenauigkeit des magnetisch-induktiven Durchflußmessers.

Eine weitere wesentliche Verbesserung ergibt sich dadurch, daß insbesondere bei zähflüssigen und pastösen Produkten die Strömungsverhältnisse in dem Ringraum zwischen der Betätigungsstange 19 und dem Meßrohr 55 wesentlich gleichmässiger sind als in einem freien Rohrquerschnitt. Der magnetisch-induktive Durchflussmesser misst ja nur den Mittelwert des Produktes aus der magnetischen Feldstärke und der Strömungsgeschwindigkeit in dem vom Magnetfeld erfassten Querschnitt. Das Messergebnis wird daher durch unterschiedliche Strömungsgeschwindigkeiten in Bereichen unterschiedlicher Magnetfeldstärken beeinflusst. Die das Messrohr 55 durchsetzende Betätigungsstange 19 verringert diese Auswirkungen, weil in dem Ringraum sowohl die Strömungsgeschwindigkeit als auch die magnetische Feldstärke gleichmässiger sind als in einem freien Rohrquerschnitt. Wenn das zu messende Produkt eine verhältnismässig grosse elektrische Leitfähigkeit hat, ist es nicht erforderlich, die Betätigungsstange 19 gegen das Produkt zu isolieren, selbst wenn sie aus Metall besteht. Wenn dagegen die Leitfähigkeit des Produkts sehr klein gegen die Leitfähigkeit der Betätigungsstange ist, muss die in Berührung mit dem Produkt kommende Fläche der Betätigungsstange 19 zumindest in dem im Innern des magnetisch-induktiven Durchflussmessers liegenden Bereich gegen das Produkt isoliert sein, beispielsweise durch eine auf die Aussenfläche der Betätigungsstange aufgebrachte Isolierschicht.

Durch besondere Ausgestaltungen der Betätigungsstange ist es möglich, die Eigenschaften des magnetisch-induktiven Durchflussmessers in gewünschter Weise zu beeinflussen. So können für den gleichen magnetisch-induktiven Durchflussmesser durch die Verwendung von Betätigungsstangen mit unterschiedlichen Querschnittsabmessungen unterschiedliche Strömungsquerschnitte erhalten werden, wodurch sich die Empfindlichkeit des Durchflussmessers and den jeweiligen Anwendungsfall optimal anpassen lässt. Das Verhältnis des Aussendurchmessers der Betätigungsstange 19 zum Innendurchmesser des Messrohres 55 kann je nach Anwendungsfall zwischen 0,2 und 0,9 liegen. Ferner können auch die magnetischen Eigenschaften des magnetisch-induktiven Durchflussmessers dadurch verbessert werden, dass die Betätigungsstange wenigstens in dem aktiven Bereich des magnetisch-induktiven Durchflußmessers aus einem weichmagnetischen Material besteht. Dadurch wird der Luftspalt des Magnetkreises auf den für die Durchflußmessung tatsächlich ausgenutzten ringförmigen Zwischenraum beschränkt und der magnetische Widerstand verringert, so daß eine kleinere Erregerleistung für die Erzeugung des Magnetfeldes genügt. Auch läßt sich durch das weichmagnetische Material die Feldverteilung in dem ringförmigen Luftspalt günstig beeinflussen.

Eine besondere Ausführungsform der Betätigungsstange 19, bei der von der zuletzt erwähnten Maßnahme Gebrauch gemacht wird, ist in den Figuren 2 und 3 dargestellt. Die Betätigungsstange 19 ist nicht massiv, sondern durch ein Hohlrohr 70 gebildet. Das Hohlrohr 70 kann aus einem nichtmagnetischen Metall bestehen, wobei es dann zumindest im Bereich des magnetisch-induktiven Durchflußmessers mit einer zusätzlichen Isolierschicht bedeckt ist, oder es kann aus einem isolierenden oder ausreichend hochohmigen Material bestehen, beispielsweise aus Kunststoff. Im Innern des Hohlrohres 70 ist ein weichmagnetisches Material 71 angebracht, das jedoch genau auf den Bereich beschränkt ist, der bei geöffnetem Ventil 17 (Fig. 3) dem aktiven Bereich des magnetisch-induktiven Durchflußmessers 20 zwischen den Polschuhen 66 und 67 entspricht. Während der Durchflußmessung, die nur bei geöffnetem Ventil stattfindet, ergibt also das weichmagnetische Material 71 die zuvor geschilderten vorteilhaften Wirkungen. In der Schließstellung des Ventils 17 (Fig. 2) ist dagegen das weichmagnetische Material 71 teilweise aus dem aktiven Bereich des magnetisch-induktiven Durchflußmessers 20 herausgeschoben. Dadurch verändern sich die magnetischen Eigenschaften des magnetisch-induktiven Durchflußmessers. Diese Änderung der magnetischen Eigenschaften kann durch eine geeignete elektronische Schaltung festgestellt werden, die dadurch ein Signal erzeugen kann, das die Verschiebung der Betätigungsstange 19 anzeigt. Dadurch kann das richtige Schließen und Öffnen des Ventils 17 überwacht werden. Für die Durchflußmessung ist die Änderung der magnetischen Eigenschaften ohne Nachteil, da bei geschlossenem Ventil keine Durchflußmessung stattfindet.

Der übrige Teil des Hohlrohres 70 kann leer bleiben oder mit einem unmagnetischen Material gefüllt werden.

Es sind natürlich zahlreiche Abweichungen von dem beschriebenen Ausführungsbeispiel möglich. Insbesondere ist die Erfindung nicht auf den Anwendungsfall der Betätigung des Ventils des Dosierkopfes einer Abfüllanlage beschränkt. Sie eignet sich grundsätzlich für jede Vorrichtung, bei welcher die Strömung eines durch eine Rohrleitung geförderten fließfähigen Produkts mit Hilfe eines magnetisch-induktiven Durchflußmessers gemessen und durch ein mittels eines stangenförmigen Betätigungsteils betätigtes Steurorgan beeinflußt werden soll. Es ist auch nicht erforderlich, daß das stangenförmige Betätigungsteil zur Betätigung des Steuerorgans axial verschoben wird; die beschriebenen Vorteile treten auch dann ein, wenn das stangenförmige Betätigungsteil in eine reine Drehbewegung versetzt wird, wie bei einer Welle, oder wenn es eine kombinierte Dreh- und Axialbewegung ausführt, wie bei einer Schraubenspindel.

Hinsichtlich der Ausbildung des stangenförmigen Betätigungsteils bestehen ebenfalls zahlreiche Möglichkeiten. Wenn auf die geschilderte Überwachung der Verschiebebewegung verzichtet wird, die bei einer reinen Drehbewegung ohnehin nicht möglich ist, kann die ganze Betätigungsstange ein massives Teil aus einem weichmagnetischen Material sein. Wenn das weichmagnetische Material ausreichend hochohmig ist, wie es beispielsweise bei Ferriten der Fall ist, entfällt auch die Notwendigkeit einer äußeren Isolierschicht.

Die Darstellung von Fig. 3 läßt erkennen, daß bei geöffnetem Ventil eine sehr gründliche Reinigung und Sterilisation der ganzen Vorrichtung auf einfache Weise möglich ist, indem statt des abzufüllenden Produkts eine Reinigungsflüssigkeit durch den Anschlußstutzen 33 eingeführt wird. Infolge des koaxialen Aufbaus ohne vorspringende Teile und tote Winkel kann die Reinigungsflüssigkeit ungehindert durchströmen und alle mit dem Produkt in Berührung kommenden Flächen gründlich spülen.

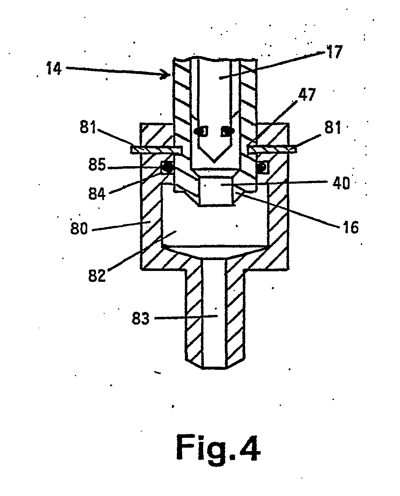

Fig. 4 zeigt eine zusätzliche Einrichtung, die auch eine gründliche Reinigung der Außenseite der Fülldüse 16 ermöglicht. Zu diesem Zweck wird über das untere Ende des Füllrohrs 14 ein Ansatzstück 80 geschoben und mittels einer in die Ringnut 47 eingreifenden Rastvorrichtung 81 gehalten. Das Ansatzstück 80 hat eine die Fülldüse 16 umgebende Kammer 82 und einen Auslaß 83 von verringertem Querschnitt. Der Auslaß 83 erzeugt einen Gegendruck für die Strömung der Reinigungsflüssigkeit, so daß diese die Kammer 82 füllt und die Außenseite der Fülldüse 16 gründlich umspült. Ein in eine innere Ringnut 84 des Ansatzstücks 80 eingelegter O-Dichtungsring 85 dichtet die Kammer 82 nach oben ab.

**Patentansprüche**

1. Vorrichtung zur Überwachung und Steuerung eines durch eine Rohrleitung (14, 15) geförderten fließfähigen Produkts, mit einem magnetisch-induktiven Durchflußmesser (20), dessen Meßrohr in die Rohrleitung eingefügt ist, und mit einem die Strömung des Produkts beeinflussenden Steuerorgan (17), das von einer Antriebsvorrichtung (18) mittels eines mechanisch verstellbaren stangenförmigen Betätigungsteils (19) betätigbar ist, dadurch gekennzeichnet, daß der magnetisch-induktive Durchflußmesser (20) zwischen der Antriebsvorrichtung (18) und dem Steuerorgan (17) in die Rohrleitung (14) eingefügt ist und daß das stangenförmige Betätigungsteil (19) axial durch das Meßrohr (55) des magnetisch-induktiven Durchflußmesser hindurchgeführt ist.

2. Vorrichtung nach Anspruch 1, dadurch gekennzeichnet, dass das stangenförmige Betätigungsteil zur Betätigung des Steuerorgans in seiner Achsrichtung verschiebbar ist.

3. Vorrichtung nach Anspruch 1 oder 2, dadurch gekennzeichnet, dass das stangenförmige Betätigungsteil zur Betätigung des Steuerorgans drehbar ist.

4. Vorrichtung nach Anspruch 2 oder 3, dadurch gekennzeichnet, dass das Steuerorgan ein den Durchfluss des Produkts steuerndes Ventil ist.

5. Vorrichtung nach Anspruch 4, dadurch gekennzeichnet, dass sie der Dosierkopf einer Abfüllanlage ist.

6. Vorrichtung nach Anspruch 5, gekennzeichnet durch ein Ansatzstück, das zur Reinigung und Sterilisation der Austrittöffnung des Dosierkopfes an dessen Austrittsende ansetzbar ist und eine die Austrittsöffnung umgebende Kammer sowie einen Auslass von verringertem Querschnitt aufweist.

7. Vorrichtung nach einem der Ansprüche 1 bis 6, dadurch gekennzeichnet, dass zumindest der in Berührung mit dem Produkt stehende Teil des stangenförmigen Betätigungsteils aus einem isolierenden oder hochohmigen Material besteht oder mit einer Isolierschicht bedeckt ist.

8. Vorrichtung nach einem der Ansprüche 1 bis 7, dadurch gekennzeichnet, dass das stangenförmige Betätigungsteil mindestens im Bereich des magnetisch- induktiven Durchflussmessers vollständig oder teilweise aus einem weichmagnetischen Material besteht.

9. Vorrichtung nach Anspruch 8, dadurch gekennzeichnet, dass bei einem zur Betätigung eines Ventils axial verschiebbaren Betätigungsteil das weichmagnetische Material auf den Bereich beschränkt ist, der in der Offenstellung des Ventils dem aktiven Bereich des Magnetkreises des magnetisch-induktiven Durchflussmessers entspricht, und dass eine Schaltung vorgesehen ist, die ein von den Aenderungen der magnetischen Eigenschaften des Magnetkreises abhängiges Signal zur Ueberwachung der Ventilbetätigung erzeugt.

10. Vorrichtung nach Anspruch 9 oder 10, dadurch gekennzeichnet, dass das stangenförmige Betätigungsteil als Hohlrohr ausgebildet ist und dass das weichmagnetische Material in das Innere des Hohlrohres eingebracht ist.

**Claims**

1. An arrangement for monitoring and controlling a fluid product transported through a pipe (14, 15), comprising a magneto-inductive flow meter (20), of which the measuring tube is inserted into the pipe, and a control element (17) which influences the flow of the product and which is designed to be actuated by a drive mechanism (18) via a mechanically adjustable rod-like actuator (19), characterized in that the magneto-inductive flow meter (20) is installed in the pipe (15) between the drive mechanism (18) and the control element (17) and in that the rod-like actuator (19) is passed axially through the measuring tube (55) of the magneto-inductive flow meter.

2. An arrangement as claimed in claim 1, characterized in that the rod-like actuator for actuating the control element is axially displaceable.

3. An arrangement as claimed in claim 1 or 2, characterized in that the rod-like actuator for actuating the control element is rotatable.

4. An arrangement as claimed in claim 2 or 3, characterized in that the control element is a valve which controls the throughflow of product.

5. An arrangement as claimed in claim 4, characterized in that that it is the metering head of a filling machine.

6. An arrangement as claimed in claim 5, characterized by an attachment which, for cleaning and sterilization of the outlet opening of the metering head, is designed for attachment to the outlet end thereof and which comprises a chamber surrounding the outlet opening and also an outlet of reduced cross-section.

7. An arrangement as claimed in any of claims 1 to 6, characterized in that at least that part of the rod-like actuator which is in contact with the product consists of an insulating or highly resistive material or is covered with an insulating layer.

8. An arrangement as claimed in any of claims 1 to 7, characterized in that, at least in the vicinity of the magneto-inductive flow meter, the rod-like actuator consists completely or partly of a soft magnetic material.

9. An arrangement as claimed in claim 8, characterized in that, where the actuator is axially displaceable for actuating a valve, the soft magnetic material is limited to that region which, in the open position of the valve, corresponds to the active part of the magnetic circuit of the magneto-inductive flow meter, and in that a circuit is provided which generates a signal dependent on the changes in the magnetic properties of the magnetic circuit for monitoring actuation of the valve.

10. An arrangement as claimed in claim 9 or 10, characterized in that the rod-like actuator is in the form of a hollow tube and in that the soft magnetic material is accommodated in the interior of the hollow tube.

**Revendications**

1. Dispositif de contrôle et de commande d'un produit fluide, transporté dans une tuyauterie (14, 15), comportant un débitmètre (20) magnéto-inductif dont le tube de mesure est inséré dans la tuyauterie et comportant un organe de commande (17), agissant sur l'écoulement du produit, qui peut être actionné par un dispositif d'entraînement (18), au moyen d'un élément d'actionnement (19) en forme de tringle, déplaçable mécaniquement, caractérisé en ce que le débitmètre (20) magnéto-inductif est placé dans la tuyauterie (14), entre le dispositif d'entraînement (18) et l'organe de commande (17), et en ce que l'élément d'actionnement (19) en forme de tringle traverse axialement le tube de mesure (55) du débitmètre magnéto-inductif.

2. Dispositif selon la revendication 1, caractérisé en ce que l'élément d'actionnement en forme de tringle peut être déplacé axialement pour actionner l'organe de commande.

3. Dispositif selon la revendication 1 ou 2, caractérisé en ce que l'élément d'actionnement en forme de tringle peut tourner pour actionner l'organe de commande.

4. Dispositif selon la revendication 2 ou 3, caractérisé en ce que l'organe de commande est une vanne commandant le débit du produit.

5. Dispositif selon la revendication 4, caractérisé en ce qu'il constitue la tête de dosage, d'une installation de remplissage.

6. Dispositif selon la revendication 5, caractérisé par un embout qui peut être placé à l'extrémité de la tête de dosage, pour le nettoyage et la stérilisation de son orifice de sortie, et comporte une chambre entourant l'orifice de sortie ainsi qu'une évacuation de section réduite.

7. Dispositif selon l'une quelconque des revendications 1 à 6, caractérisé en ce qu'au moins la partie de l'élément d'actionnement en forme de tringle, en contact avec le produit, est réalisée dans un matériau isolant ou de grande résistance électrique, ou est recouverte d'une couche isolante.

8. Dispositif selon l'une quelconque des revendications 1 à 7, caractérisé en ce que l'élément d'actionnement en forme de tringle est réalisé, au moins dans la zone du débitmètre magnéto-inductif, totalement ou partiellement dans un matériau magnétique doux.

9. Dispositif selon la revendication 8, caractérisé en ce que, dans le cas d'un élément d'actionnement déplaçable axialement pour actionner une vanne, le matériau magnétique doux est limité à la zone qui, en position d'ouverture de la vanne, correspond à la zone active du circuit magnétique du débitmètre magnétoinductif, et en ce qu'on prévoit un circuit qui produit un signal, dépendant des variations des propriétés magnétiques du circuit magnétique, pour contrôler l'actionnement de la vanne.

10. Dispositif selon la revendication 9 ou 10, caractérisé en ce que l'élément d'actionnement en forme de tringle est un tube creux et en ce que le matériau magnétique doux est placé à l'intérieur du tube creux.

EP 0 236 693 B1

Fig.1

Fig. 2

Fig. 3

Fig.4